# EUROPEAN PATENT APPLICATION

(11) **EP 2 071 172 A1**
(43) Date of publication of application: **17.06.2009**
(21) Application number: 07123157.5
(22) Date of filing: 13.12.2007
(51) Int. Cl.: F02M 25/08, B60K 15/035, B01D 53/04, B01D 46/00, B60R 11/00

(54) **Canister with overmolded filter**

(71) Applicant: Delphi Technologies, Inc., Troy, Michigan 48007 (US)
(72) Inventor: Kalina, Andrzej, 32-020, Wieliczka (PL); Zuchara, Pawel, 32-091, Michalowice (PL); Gadek, Michal, 30-091, Krakow (PL)
(74) Representative: Robert, Vincent

(57) **Abstract**

An evaporative emission storage canister (24) having a main chamber containing activated carbon for adsorbing evaporative fuel emissions, and having an additional chamber containing an elongated monolith element (34) for adsorbing carbon particles, wherein the main chamber is in communication with the fuel tank and with the additional chamber, wherein the additional chamber is in communication with an on-board diagnostic device through a canister outlet (28), wherein the outlet end of the monolith element (34) is equipped with an annular seal (42) comprising sealing lips (46) which bears against an inside portion of the additional chamber keeping the monolith element (34) in place, and wherein a filter (50) is arranged between the outlet end of the monolith element (34) and the canister outlet (28), characterized in that the filter (50) is overmolded with the seal (42) and in that the filter (50) closes the outlet end of the monolith element (34).

## Description

### TECHNICAL FIELD

The present invention relates generally to automotive emission storage canisters.

### BACKGROUND OF THE INVENTION

In many jurisdictions regulations require the use of systems to prevent or minimize air pollution by evaporation of fuel from vehicle tanks. Commonly, such systems make use of a "carbon canister" arrangement, in which hydrocarbon vapors arising from evaporation of tank fuel are adsorbed on activated carbon particles within a container or canister when the vehicle is inactive. The adsorbed hydrocarbons are subsequently removed or purged during engine operation by drawing air through the canister and directing the resulting air/fuel mixture into the engine intake system.

In order to comply with very low emission limits, the vehicle fuel system comprising the emission storage canister need to be designed properly and to be tight. Tightness of the system is controlled by an On Board Diagnostic (OBD) device. This device is the last component in the fuel system flow and it is located at the system outlet, just behind the canister outlet. This OBD device is sensitive to the carbon dust and therefore it needs to be protected against carbon particles bigger than 40 to 60 microns. For this reason, the canister is provided with an additional chamber located before the canister outlet and containing an elongated monolith element for adsorbing the carbon particles. The outlet end of the monolith is equipped with an annular seal comprising sealing lips which bears against an inside portion of the additional chamber keeping the monolith in place and a filter is arranged between the outlet end of the monolith and the canister outlet.

Generally, the filter is made of needled polyester and it is ultrasonically welded to the canister body. This operation requires a specific welding rib on the canister body with proper flatness to ensure that the welding is done on the overall periphery of the filter without risk for the carbon particles to bypass the filter. Moreover, it is required to provide the canister body with an annular space between the welding rib and the inside wall of the canister body for insertion of the welding device. Because of this annular space, the canister outlet diameter is smaller which restricts the flow in the canister.

### SUMMARY OF THE INVENTION

In order to overcome the previous mentioned drawbacks and to improve canister efficiency, the present invention provides an evaporative emission storage canister having a flow path therethrough, particularly for a fuel tank, having a main chamber containing activated carbon for adsorbing evaporative fuel emissions, and having an additional chamber containing an elongated monolith element for adsorbing carbon particles, wherein the main chamber is in communication with the fuel tank and with the additional chamber, wherein the additional chamber is in communication with an on-board diagnostic device through a canister outlet, wherein the outlet end of the monolith element is equipped with an annular seal comprising sealing lips which bears against an inside portion of the additional chamber keeping the monolith element in place, and wherein a filter is arranged between the outlet end of the monolith element and the canister outlet, characterized in that the filter is overmolded with the seal and in that the filter closes the outlet end of the monolith element.

The annular seal with integrated filter provides a better sealing and a better filtering allowing a better efficiency of the canister adsorption action and allowing a better longevity of the on board diagnostic device.

According to other features of the invention:
- the seal is fitted on the outlet end of the monolith element;
- the filter is made of steel mesh;
- mesh size is calibrated according to the size of carbon particles which have to be captured by the filter.

The above-described and other features of the present disclosure will be appreciated and understood by those skilled in the art from the following detailed description, drawings, and appended claims.

### BRIEF DESCRIPTION OF THE DRAWINGS

Figure 1 is a schematic diagram of a vehicle fuel system incorporating a canister according to the invention;
Figure 2 is a side view of the canister according to figure 1;
Figure 3 is a partial cross-section view showing the filter and the seal provided within the canister according to figure 1;
Figure 4 is a perspective view of the seal equipped with the filter shown on figure 3.

### DESCRIPTION OF THE PREFERRED EMBODIMENTS

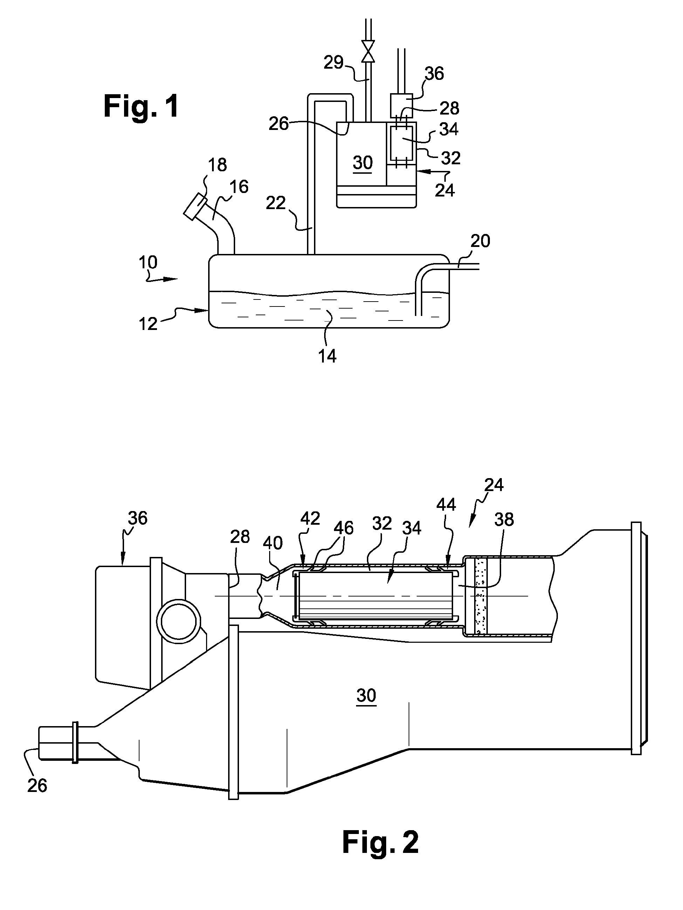

Referring to figure 1 and 2, a vehicle fuel system 10 includes a fuel tank 12 containing fuel 14 and having a fill pipe 16 closed by a cap 18 which forms a seal with the fill pipe 16. Fuel is discharged from the tank 12 via fuel line 20 towards the engine of the vehicle (not shown). The fuel tank 12 is vented to atmosphere by a connection line 22 which leads to an evaporative emission storage canister 24.

The canister 24 has a flow path therethrough from an inlet 26 to an outlet 28, so that the vapors flow through a main chamber 30 and then through an additional chamber 32. It is provided with a vapor outlet port 29 for connection to the vehicle's engine intake (not shown). The main chamber 30 contains granules/pellets of activated carbon whereas the additional chamber 32 contains an elongated monolith element 34 for adsorbing big carbon particles, preferably carbon particles bigger than 40 to 60 microns.

The canister outlet 28 is connected to an On-Board Diagnostic device 36 which checks the tightness of the canister 24.

According to the present embodiment, the additional chamber 32 has a tubular shape with an inlet opening 38 communicating with the main chamber 30 and with an outlet opening 40 communicating with the canister outlet 28.

The monolith element 34 is axially inserted inside the additional chamber 32 and is maintained in this chamber thanks to annular seals 42, 44 which are tightly fitted on each of the two opposite ends of the monolith element 34.

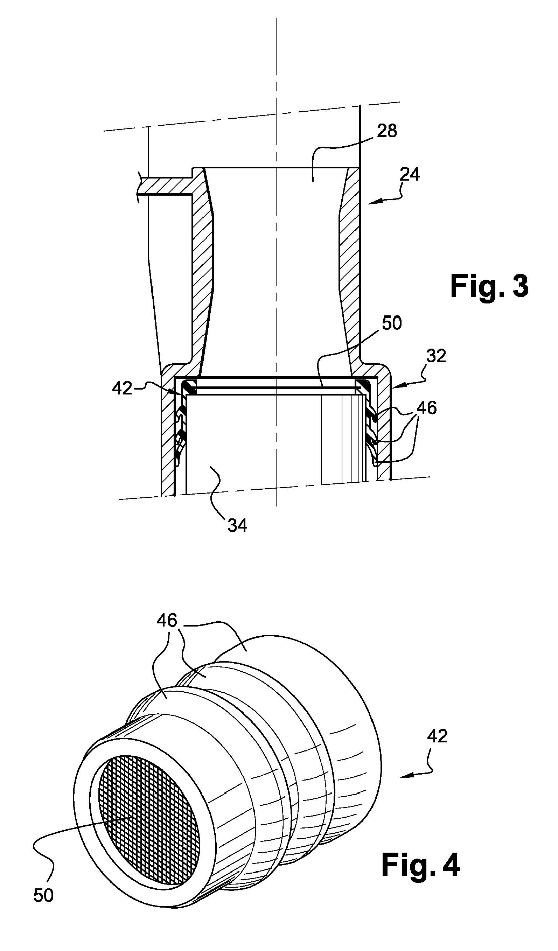

As can be seen more in details on figure 3 and 4, each annular seal 42, 44 has external sealing lips 46 bearing against the inside wall 48 of the additional chamber 32 in order to maintain radially the monolith element 34 in the additional chamber 32 as well as to prevent carbon particles from by-passing the monolith element 34. According to a preferred embodiment, each annular seal 42, 44 has at least two, preferably three, peripheral sealing lips 46.

Operation of such a canister 24 has been explained many times in prior art documents, for example in US 6,390,073, so it will not be described in details.

According to the present invention, a filter 50 is overmolded with the annular seal 42 arranged at the outlet end of the monolith element 34 so as to form a single part to be assembled on the monolith element 34. According to a preferred embodiment, the filter 50 is made of metallic mesh, preferably steel mesh. The filter 50 covers entirely the outlet end surface of the monolith element 34 so that the carbon particles could not by pass the monolith element 34 and/or the filter 50.

The steel mesh filter 50 can be easily placed over a mould core for overmoulding the annular seal 42. Thus the present invention provides a simple, cheap, and easy way of assembling the canister 24 with an efficient tight sealing at the outlet of the additional chamber 32.

The annular seal 42 with integrated filter 50 create lower flow restriction than an assembly with annular seal and needled polyester filter. Moreover, mesh size is more stable and can be chosen more accurately which allow a better filtration control regarding size of carbon particle to be captured by the filter 50. Mesh size can be accurately calibrated according to the size of the carbon particles to be captured.

## Claims

1. An evaporative emission storage canister (24) having a flow path therethrough, particularly for a fuel tank (12), having a main chamber (30) containing activated carbon for adsorbing evaporative fuel emissions, and having an additional chamber (32) containing an elongated monolith element (34) for adsorbing carbon particles, wherein the main chamber (30) is in communication with the fuel tank (12) and with the additional chamber (32), wherein the additional chamber (32) is in communication with an on-board diagnostic device (36) through a canister outlet (28), wherein the outlet end of the monolith element (34) is equipped with an annular seal (42) comprising sealing lips (46) which bears against an inside portion of the additional chamber (32) keeping the monolith element (34) in place, and wherein a filter (50) is arranged between the outlet end of the monolith element (34) and the canister outlet (28), **characterized in that** the filter (50) is overmolded with the seal (42) and **in that** the filter (50) closes the outlet end of the monolith element (34).

2. The canister (24) according to claim 1, **characterized in that** the seal (42) is fitted on the outlet end of the monolith element (34).

3. The canister (24) according to claim 1 or 2, **characterized in that** the filter (50) is made of steel mesh.

4. The canister (24) according to claim 3, **characterized in that** mesh size is calibrated according to the size of carbon particles which have to be captured by the filter (50).
